# EUROPEAN PATENT APPLICATION

(11) **EP 3 111 740 A1**
(43) Date of publication of application: **04.01.2017**
(21) Application number: 16176096.2
(22) Date of filing: 24.06.2016
(51) Int. Cl.: A01D 34/82

(54) **FRAME OF A LAWNMOWER VEHICLE**

(30) Priority: 29.06.2015 IT UB20151746
(71) Applicant: GGP Italy S.p.A., 31033 Castelfranco Veneto (TV) (IT)
(72) Inventor: HIPPOLITI, Raimondo, 50053 EMPOLI (FI) (IT); STOCCO, Maurizio, 31033 CASTELFRANCO VENETO (TV) (IT); BARRERO CAROPRESE, David Ricardo, 31033 CASTELFRANCO VENETO (TV) (IT); GAMBALONGA, Leonardo, 35010 MASSANZAGO (PD) (IT)
(74) Representative: Mittler, Andrea

(57) **Abstract**

A frame (1) for a lawnmower vehicle which can be ridden by an operator is described, comprising at least one support frame (3, 4) comprising two side walls (320, 420) and an upper wall (380, 480) mounted on the two side walls (320, 420), which in turn are mounted integrally straddling two longitudinal rods (220) of a base platform frame (2) of the lawnmower vehicle, which are arranged parallel along a longitudinal axis (L), thus identifying a through opening (300, 400) along the longitudinal axis (L).

## Description

The present invention relates to a frame of a lawnmower vehicle.

External frames of lawnmower vehicles exist in the prior art, such as for example US-5238267, US-5558368 or CA-2148959-C and US-5347799, which describe an external frame made of reinforced plastic or fiberglass which support a seat, pedals, linkages and a steering. Said external frame is mounted on a base platform frame. US-4726440 and US-2010/0289233-A1 describe a base platform frame for supporting an external support frame for a steering or an external support frame for a seat. EP-2721916-A1 and US-6497453-B2 describe an external frame mounted on a rear support frame for a seat. Said rear frame is mounted on a base platform frame. Said base platform frame comprises two longitudinal metal rods arranged parallel to each other along a longitudinal axis. Said base platform frame of EP-2721916-A1 comprises at least two transversal metal rods which link the two longitudinal rods and space apart a left longitudinal rod from a right longitudinal rod of said two longitudinal rods. Said rear frame is a monocoque body which comprises supports for pedals, supports for a seat, a battery, and a fuel container. Said rear frame described in EP-2721916-A1 comprises double walls and reinforcing ribs for reinforcing the structure of the rear frame. The walls of EP-2721916-A1 have thicknesses comprise between 5 mm and 7 mm, disadvantageously making the rear frame heavy, also considering the fact that certain walls are double and that the reinforcing ribs are positioned as counterforts for reinforcing the structure of the frame. The frame of EP-2721916-A1 is substantially a parallelepiped with reinforced housings for mounting the various supports and is disadvantageously heavy. Moreover, it is disadvantageously complex to be molded due to the geometry thereof and the multiplicity of housings which require a multiplicity of solid and hollow areas.

Patent EP-2193983 of the applicant describes two metal support frames for an external frame which are mounted on a metal base platform frame of the lawnmower vehicle comprising two longitudinal metal rods arranged parallel to each other along a longitudinal axis. Said support frames comprise two vertical side walls and a transversal upper wall mounted on the two side walls. The two side walls of said support frames are mounted integrally straddling the base platform frame and each side wall of said at least one support frame is mounted integrally with one of the two longitudinal rods of the base platform frame. Disadvantageously, the support frame and the metal platform frame make the lawnmower heavy and difficult to be built, with a multiplicity of components to be assembled.

No base platform frame and no support frame in the prior art is made of plastic.

It is the object of the present invention to manufacture a frame of a lawnmower vehicle which is lightweight, easy to be assembled, is less complex even from a constructional viewpoint, reduces the number of components to be assembled, reduces assembly times, increases reliability and performance, is much more lightweight and more resistant, is resistant to external stresses, does not become deformed and is simple to be molded or extruded.

According to the invention, such an object is achieved by a frame of a lawnmower vehicle which can be ridden by an operator according to claim 1.

These and other features of the present invention will become more apparent from the following detailed description of a practical embodiment thereof, shown by way of non-limiting example in the accompanying drawings, in which:
Figure 1 shows a side plan view of a frame of a rideable lawnmower vehicle comprising a base platform frame which mounts a front support frame for a hood, a steering housing, a pedal support, a tank and a radiator, and a rear support frame for supporting a seat, a battery and for supporting a collecting bag;
Figure 2 shows a top plan view of the frame of the rideable lawnmower vehicle in Figure 1;
Figure 3 shows a front plan view of the front support frame;
Figure 4 shows a top plan view of the front support frame in Figure 3;
Figure 5 shows an enlargement B of Figure 2 which shows the pedal support;
Figure 6 shows a sectional view according to line VI-VI in Figure 5;
Figure 7 shows a side plan view of the front support frame in Figure 3;
Figure 8 shows a sectional view according to line VIII-VIII in Figure 4;
Figure 9 shows a rear plan view of the front support frame in Figure 3;
Figure 10 shows an enlargement A of Figure 1 which shows a coupling means between the front support frame and the base platform frame;
Figure 11 shows a sectional view according to line XI-XI in Figure 10;
Figure 12 shows a front perspective view of the rear support frame;
Figure 13 shows a front plan view of the rear support frame in Figure 12;
Figure 14 shows a top plan view of the rear support frame in Figure 12;
Figure 15 shows a side plan view of the rear support frame in Figure 12;
Figure 16 shows an enlargement C of Figure 2 which shows a coupling means between the rear support frame and the base platform frame;
Figure 17 shows a sectional view according to line XVII-XVII in Figure 16.

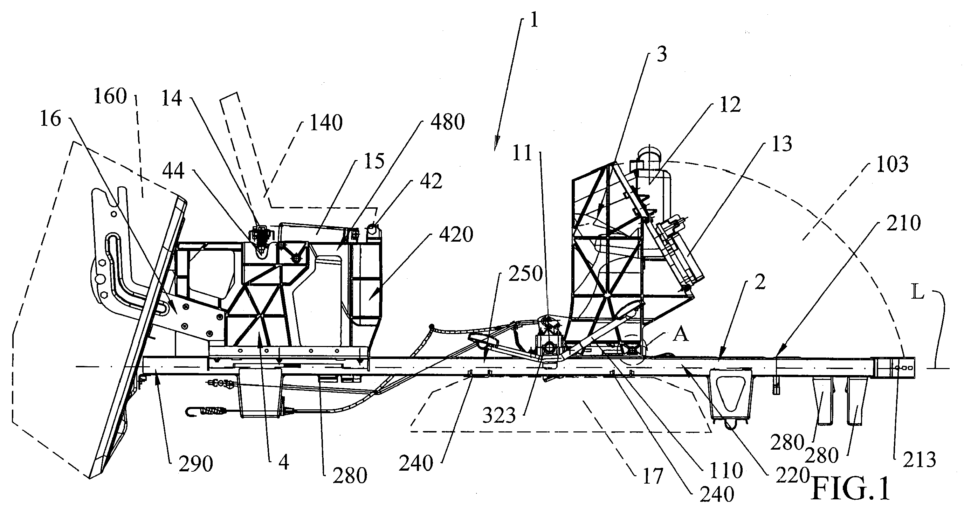

With reference to the figures listed above, and in particular to Figures 1-2, a frame 1 of a lawnmower vehicle which can be ridden by an operator is noted. Said lawnmower comprises a base platform frame 2. Said frame 1 comprises a front support frame 3 and a rear support frame 4. Said front support frame 3 and said rear support frame 4 are mounted on said base platform frame 2. Said front support frame 3 and said rear support frame 4 are adapted to mount an external frame.

Said base platform frame 2 comprises two longitudinal rods 220 arranged parallel to each other along a longitudinal axis L. Said two longitudinal rods 220 identify a left side and a right side, respectively, of the base platform frame 2.

The two longitudinal rods 220 may be made of a metallic material, preferably of steel.

Said base platform frame 2 also comprises at least two transversal rods 280 which link the two longitudinal rods 220 and space apart a left longitudinal rod 220 from a right longitudinal rod 220 of said two longitudinal rods 220.

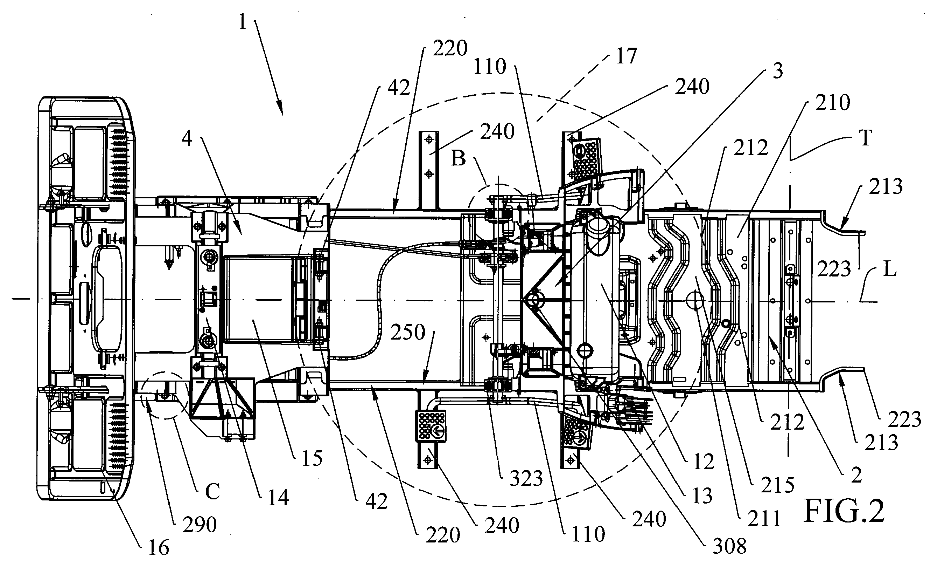

The two transversal rods 280 may be made of metallic material, preferably of steel. Said at least two transversal rods 280 are arranged parallel to each other along a transversal axis T which is perpendicular to the longitudinal axis L. As shown in Figure 2, said longitudinal axis L and said transversal axis T identify a geometrical plane which is parallel to the ground.

The two longitudinal rods 220 describe a left side and a right side, respectively, of the base platform frame 2 and support both the front support frame 3 and the rear support frame 4.

Said base platform frame 2 of the lawnmower comprises a front portion 210, a middle portion 250 and a rear portion 290.

The front portion 210 of the base platform frame 2 comprises a reinforced platform 215 for supporting a motor. Said reinforced platform 215 has a through hole 211 which is the housing for a drive pulley engaged with the motor. The reinforced platform 215 comprises transversal ribs 212 which reinforce the reinforced platform 215 and allow the reinforced platform 215 to advantageously support the motor.

The front portion 210 also comprises two C-shaped ends 213, each of which 213 is arranged at the front end of the respective longitudinal rod 220. The C shape of the two C-shaped ends 213 allows a front wheel axle and power transmission supports to be mounted more easily.

As shown in Figure 2, the two C-shaped ends 213 have a concave part facing the outside of the base platform frame 2. Two end prolongations 223 of the two C-shaped ends 213 are parallel to each other and are parallel to the longitudinal axis L. Said two prolongations 223 comprise through holes for mounting the axle of the wheels, as shown in Figure 1.

The middle portion 250 of the base platform frame 2 mounts two transversal support rods 240 for carrying and mounting a cutting plate 17 of the lawnmower.

The front support frame 3 is mounted with the two longitudinal rods 220 of said middle portion 250 of said base platform frame 2. The front support frame 3 is mounted on the two longitudinal rods 220 by means of front engagement means 301, 302 included in a list comprising screws and pins.

Said front support frame 3 is made of a material included in a list comprising 40% glass reinforced polypropylene, from 10% to 60% glass reinforced polypropylene, fiberglass reinforced plastic, where the glass is comprised between 10% and 60% to simplify the construction or facilitate the molding or extrusion advantageously. Said front support frame 3 advantageously is lightweight and resistant to deformations.

Said front support frame 3 comprises a steering housing 308, a support 311 for pedals 110. Said front support frame 3 supports a hood 103, a tank 12 and a radiator 13.

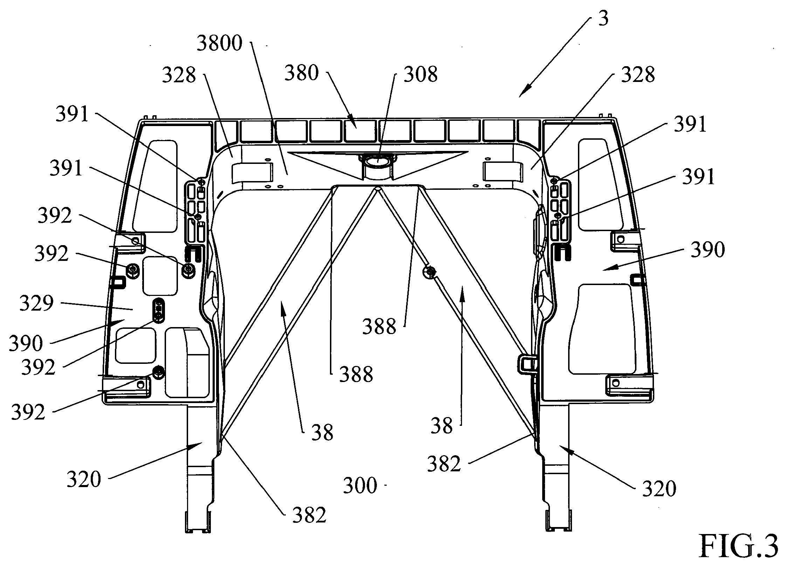

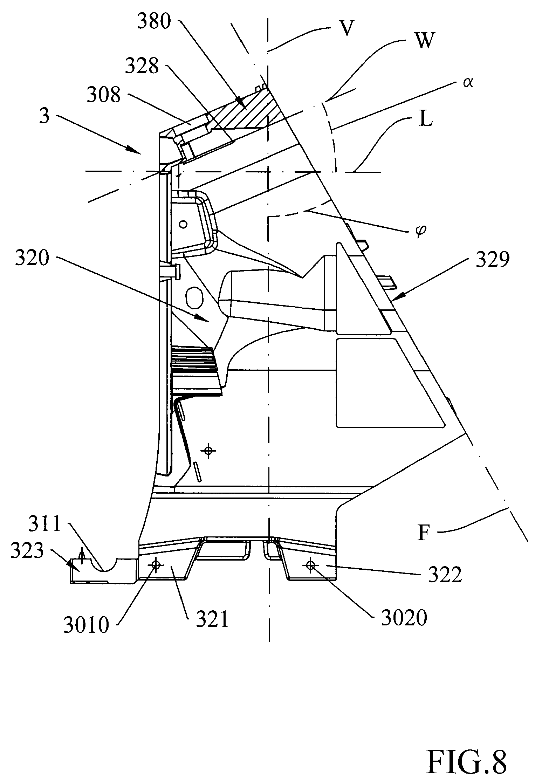

As shown in particular in Figures 3-11, said front support frame 3 consists of two side walls 320, an upper wall 380 and two reinforcing arms 38. The upper wall 380 of the front support frame 3 comprises the steering housing 308, which is a through hole 308 of the upper wall 380. The upper wall 380 is mounted on the two side walls 320 of the front support frame 3. The two side walls 320 and the upper wall 380 form a door. The two side walls 320 are mounted on two longitudinal rods 220 of the base platform frame 2. The side walls 320 raise upward relative to the base platform frame 2. The upper wall 380 is arranged along the transversal axis T.

The front support frame 3 is mounted straddling the two longitudinal rods 220 of the support platform frame 2. Along the longitudinal axis L there is indeed noted a front through opening 300 of the front support frame 3 identified by the base platform frame 2, the two side walls 320 of the front support frame 3 and the upper wall 380 of the front support frame 3.

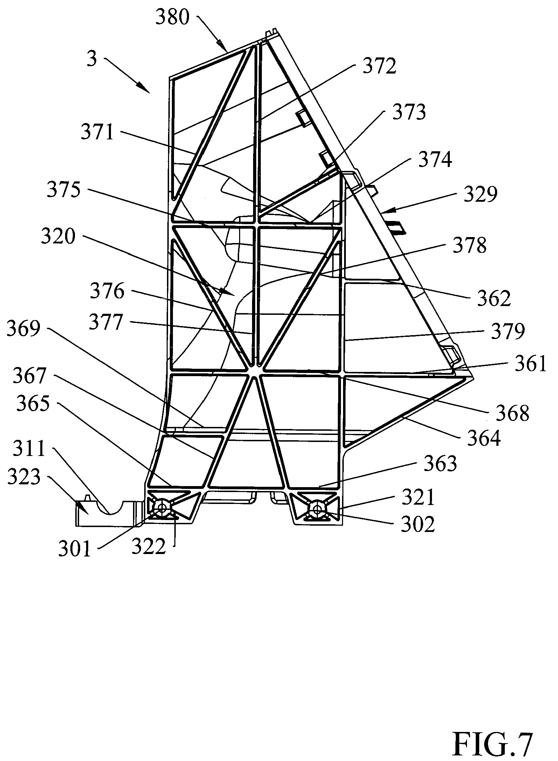

As shown in particular in Figures 7-8, 10-11, each side wall 320 of the two side walls 320 comprises two lower prolongations 321, 322 which overlap the L-shaped portions 221 of the longitudinal rods 220. Said L-shaped portions 221 of the longitudinal rods comprise through holes 2210 which overlap another through hole 3010, 3020 of the two lower prolongations 321, 322 so that the front coupling means 301, 302 may penetrate the respective through holes 3010, 3020 of the two lower prolongations 321, 322 and penetrate the respective through holes 2210 of said L-shaped portions 221 of the longitudinal rods 220.

The front support frame 3 comprises two lower prolongations 321, 322 for each side wall 320 so that it may be advantageously mounted integrally and securely on four points on the two longitudinal rods 220.

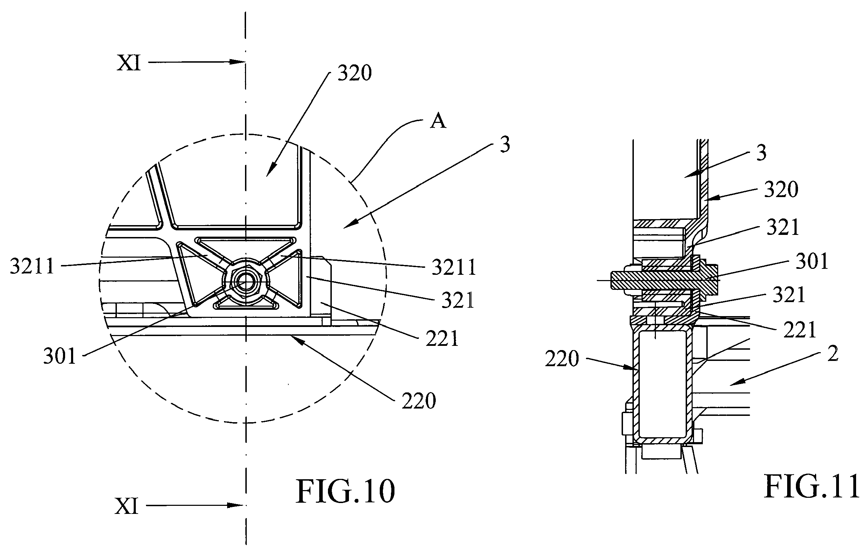

The prolongations 321, 322 comprise reinforcing ribs 3211 for advantageously better releasing the forces and tensions of the front support frame 3. Each prolongation 321, 322 comprises at least two of said ribs 3211 arranged along diagonals of the prolongation 321, 322, as shown in particular in Figure 10. An intersection between the ribs 3211 identifies the through hole 3210, 3220 of the lower prolongation 312, 322. Said ribs 3211 contribute to reinforcing the housing for the engagement means 301, 302.

As shown in particular in Figures 2, 4-9, each side wall 320 of the front support frame 3 comprises a lower prolongation 323 which extends toward the back of frame 1 along the longitudinal axis L, staying on the respective longitudinal rod 220. Each lower prolongation 323 starts from the rear lower prolongation 322 of the side wall 320.

Each lower prolongation 323 comprises an upper surface which is carved to form a support housing 311 for an axle 11 of the pedals 110. The axle of the pedals 110 is arranged along the transversal axis T. The axle 11 of the pedals 110 mounts the pedals 110, as shown in particular in Figures 1-2.

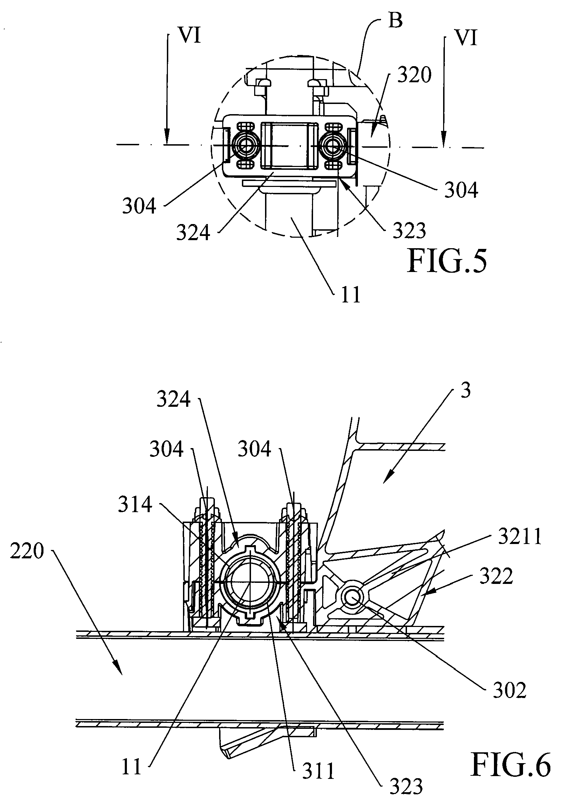

The support 311 for the axle 11 of the pedals 110 of prolongation 323 rotatably mounts the axle 11 of the pedals 11. Said prolongation 323 comprises an upper portion 324. Said upper portion 324 of prolongation 323 comprises a lower surface which is carved in a lower housing 314 in a complementary shape to support 311, so that when the upper portion 324 is mounted with prolongation 323 by means of the engagement means 304, the axle 11 of the pedals 110 remains rotatably mounted between support 311 and the lower housing 314, as shown in particular in Figure 6. Said prolongation 323 rotatably mounts the axle 11 of the pedals 110.

As shown in particular in Figures 7-8, said side wall 320 raises upward. The side wall 320 ends upward, along the vertical axis V, with an oblique surface 328 which mounts the upper wall 380. The oblique surface 328 of the side wall 320 identifies an oblique axis W which forms, with the longitudinal axis L, a dashboard angle α where the upper wall 380 can be mounted. The dashboard angle α depends on the position of the seat and is to be such as to allow a driver positioned on the seat in the rear portion 290 of the base platform frame 2 of frame 1 of the lawnmower, to manipulate the steering to drive the lawnmower. The dashboard angle α is comprised between 0° and 90° depending on the type of rideable lawnmower. The upper surface 328 of the side wall 320 faces the driver, who is positioned at the back, i.e. said oblique surface 328 faces the back of frame 1.

The upper wall 380 forms a dashboard. The upper wall 380 comprises a through hole 308 which is the steering housing 308. Housing 308 is adapted to allow an axle of the steering to pass, thereby mounting the driving steering.

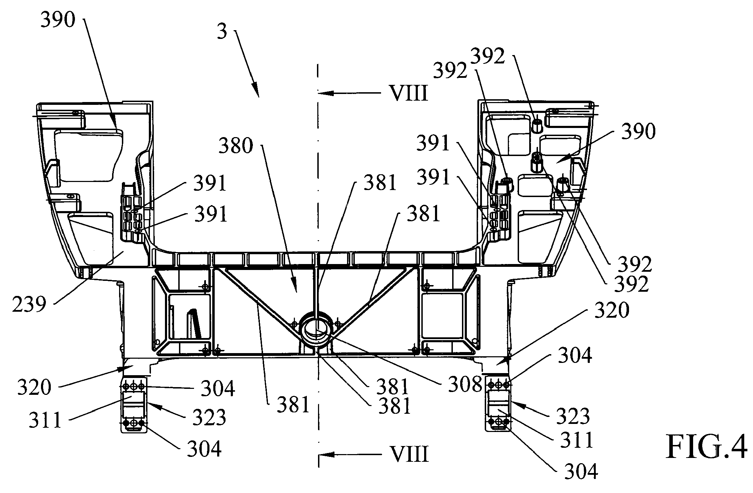

The upper wall 380 of the front support frame 3 comprises a multiplicity of reinforcing ribs 381 arranged at the steering housing 308. As shown in Figure 4, said ribs 381 reinforce the structure of the upper wall 380 to reinforce the steering housing 308.

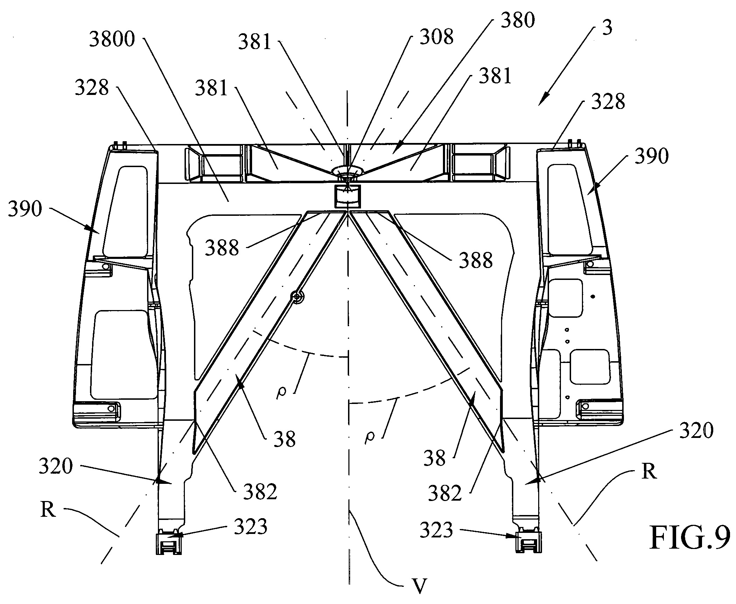

As shown in particular in Figures 3, 9, two reinforcing arms 38 depart from the upper wall 380 at a lower surface 3800 of the upper wall 380. Each reinforcing arm 38 comprises an upper end 388 arranged at the steering housing 308 and linked to said upper wall 380, and a lower end 382 linked to one only of said two side walls 320. Said lower end 382 of the reinforcing arm 38 is arranged near a lower portion of the side wall 320, close to the lower prolongations 321, 322. Both the upper end 388 of the left reinforcing arm 38 and the upper end 388 of the right reinforcing arm 38 are linked with a central portion of the upper wall 380 where the steering housing 308 is provided.

Said reinforcing arms 380 are arranged diagonally. The lower end 382 of the left reinforcing arm 38 is linked with a lower portion of the left side wall 320. The lower end 382 of the right reinforcing arm 38 is linked with a lower portion of the right side wall 320.

Said reinforcing arms 38 are adapted to advantageously release the tension and pressure forces due to the weight of tank 12, radiator 13 and hood 103. Said reinforcing arms 38 identify two reinforcing axes R which intersect only at the steering housing 308. Each reinforcing axis R forms an angle ρ with the vertical axis V; the absolute value of said angle ρ is comprised between 10° and 80° relative to the vertical axis V.

As shown in Figures 3-4, 7-8, the side wall 320 comprises a front surface 329 which mounts a front wall 390 of the upper wall 380. Said front surface 329 faces the front of frame 1 along the longitudinal axis L.

Said front surface 329 identifies a front axis F which is at a front angle ϕ comprised between 0° and 60° relative to a vertical axis V which is perpendicular to the ground.

Said front wall 390 of the front support frame 3 comprises holed housings 391 adapted to mount tank 12, and comprises holed housings 392 adapted to mount radiator 13. It is possible to also provide for the front wall 390 to mount other accessories of the lawnmower.

Said front support frame 3 also mounts the hood 103 of the lawnmower.

Studying the forces and tensions due to the accessories such as tank 12, radiator 13, hood 103 and steering, the ribs 361-369, 371-379 were distributed on the side wall 320 of the front support frame 3. Said side wall 320 of the front support frame 3 comprises said multiplicity of ribs 361-369, 371-379 which are arranged in triangular geometric modules. The arrangement of the ribs 361-369, 371-379 in triangular geometric modules contributes to strengthening the structure of the front support frame 3.

By applying pressure and tension forces axially and radially to the front support frame 3 like those occurring when using the lawnmower, a maximum movement detected is comprised between 0.5 mm and 0.9 mm if the front support frame 3 is made of 40% glass reinforced polypropylene and the walls of frame 3 are of a thickness between 2.5 and 3.5 mm. The maximum movement measures the maximum deformation of the wall of the front support frame 3 most subjected to deformation once it is subjected to an axial or radial load. The maximum movement detected for the front support frame 3 is by far better with respect to frames - even steel frames - of the prior art.

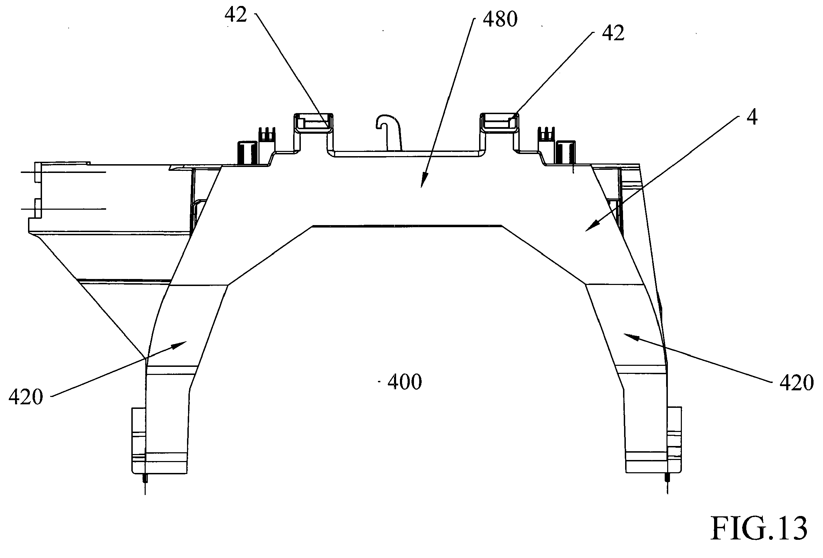

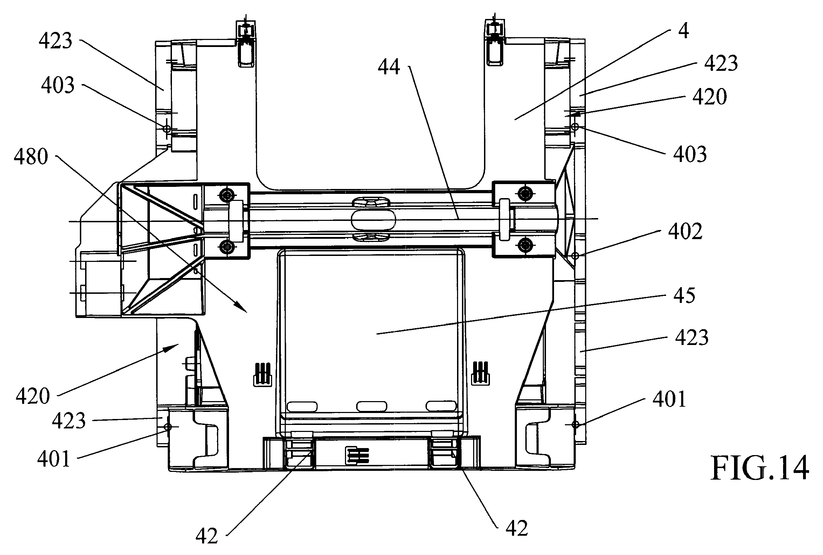

As shown in Figures 1-2, 12-17, the rear support frame 4 is mounted with the two longitudinal rods 220 of said rear portion 290 of said base platform frame 2. The rear support frame 4 is mounted on the two longitudinal rods 220 by means of rear engagement means 401-403 included in a list comprising screws and pins.

Said rear support frame 4 is made of a material included in a list comprising 40% glass reinforced polypropylene, from 10% to 60% glass reinforced polypropylene, fiberglass reinforced plastic, where the glass is comprised between 10% and 60% to simplify the construction or facilitate the molding or extrusion advantageously. Said rear support frame 4 is advantageously lightweight and resistant to deformations.

Said rear support frame 4 comprises a support housing 45 for a battery 15, a support housing 44 for a support 14 of a seat 140, two hinges 42 which hinge respective hinges of seat 140, a support housing 46 for a support 16 of a collecting bag 160.

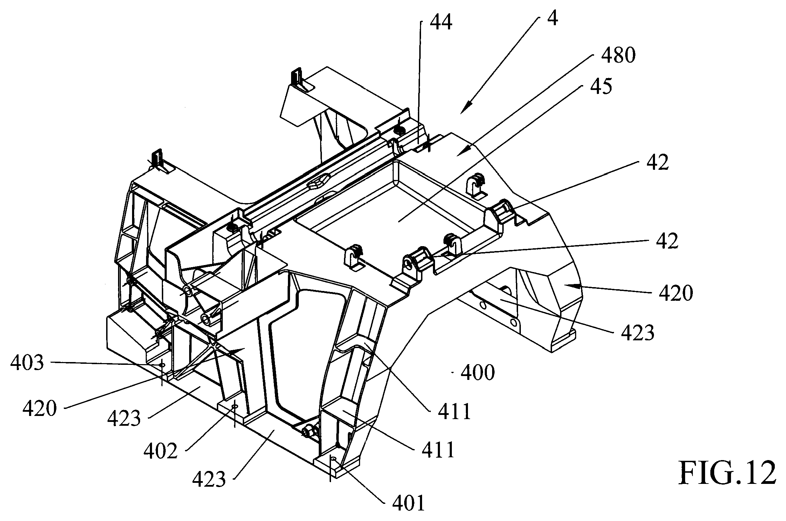

As shown in particular in Figures 12-15, said rear support frame 4 consists of said two side walls 420 and of said upper wall 480. Said rear support frame 4 is adapted to mount a seat 140.

An upper wall 480 is mounted on the two side walls 420 of said rear support frame 4. The two side walls 420 and the upper wall 480 form an arch. The two side walls 420 are mounted on two longitudinal rods 220 of the base platform frame 2. The side walls 420 raise upward relative to the base platform frame 2. The upper wall 480 is arranged along the transversal axis T.

The rear support frame 4 is mounted straddling the two longitudinal rods 220 of the support platform frame 2. Along the longitudinal axis L there is indeed noted an arc-shaped front through opening 400 of the rear support frame 4 identified by the base platform frame 2, the two side walls 420 of the rear support frame 4 and the upper wall 480 of the rear support frame 4.

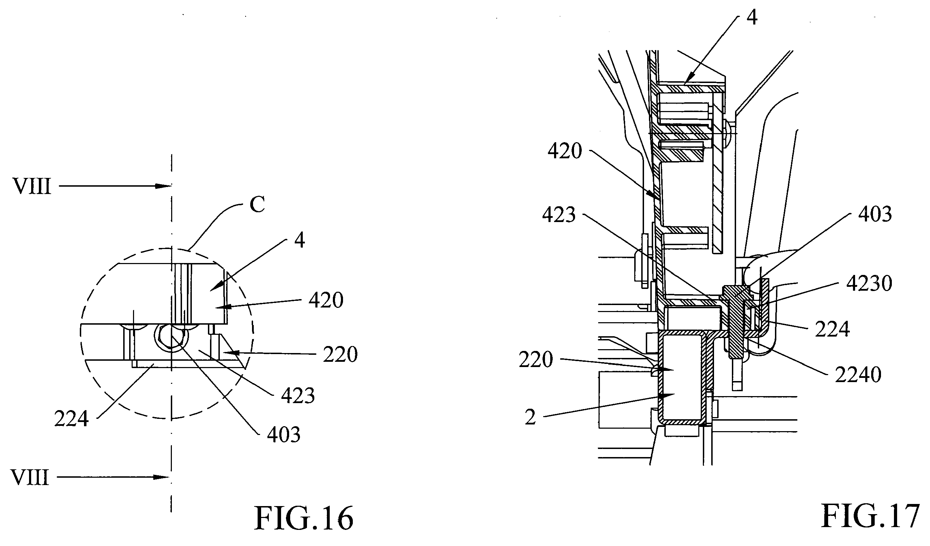

As shown in particular in Figures 12, 14, 16-17, each side wall 420 of the two side walls 420 comprises a lower prolongation 423 which extends outwardly in the direction of the transversal axis T (Figure 17). Said lower prolongation 423 comprises three through holes 4230 at the engagement means 401, 402, 403. Said three through holes 4230 of said lower prolongation 423 of the side wall 420 overlap other through holes 2240 of an L-shaped portion 224 mounted on the rear portion 290 of the longitudinal rods 220 so that the engagement means 401-403 pass through the respective holes 4230 and 2240 so as to mount the rear support frame 4 integrally with the longitudinal rods 220.

As shown in particular in Figures 12-15, said side wall 420 raises upward. The side wall 420 curves at the top to form an arch which mounts the upper wall 480. The arch is advantageous for allowing the loads due to the weight of the driver sitting on seat 140, to be better discharged.

The upper wall 480 comprises the support housing 45 for battery 15, which is a surface carved in the upper wall 480 having the dimensions of battery 15.

The upper wall 480 also comprises the support housing 44 of the support 14 of seat 140 and two hinges 42 which hinge the hinges of seat 140, respectively.

The support housing 44 of support 14 of the seat is carved in the upper wall 480 to cause the support 14 of seat 140 to be at the same height as the hinges of seat 140, which are mounted on the hinges 42.

The distance between support housing 44 and hinges 42 depends on the dimensions of a seat base of seat 140. The support 14 of seat 140 comprises a dampening system so vibrations and knocks are not transmitted to the seat base of seat 140. Seat 140 hinges with the hinges 42 and rotates thereabout by raising from support 14 to allow maintenance operations on battery 15. Battery 15 is therefore protected and covered by the seat base of seat 140.

The side wall 420 provides at least one through opening 4200 at the seat base of seat 140. Said through opening 4200 advantageously allows the weight of the rear support frame 4 to be reduced.

The side wall 420 is reinforced by two pillars 421, 422. A first pillar 421 of the side wall 420 is arranged under and at the hinges 42 and a second pillar 422 of the side wall 420 is arranged under and at the support housing 44 for the support 14 of seat 140.

The first pillar 421 is reinforced by ribs 411.

The second pillar 422 of the side wall 420 is reinforced with a multiplicity of other ribs 412 geometrically arranged to form a lattice of triangles.

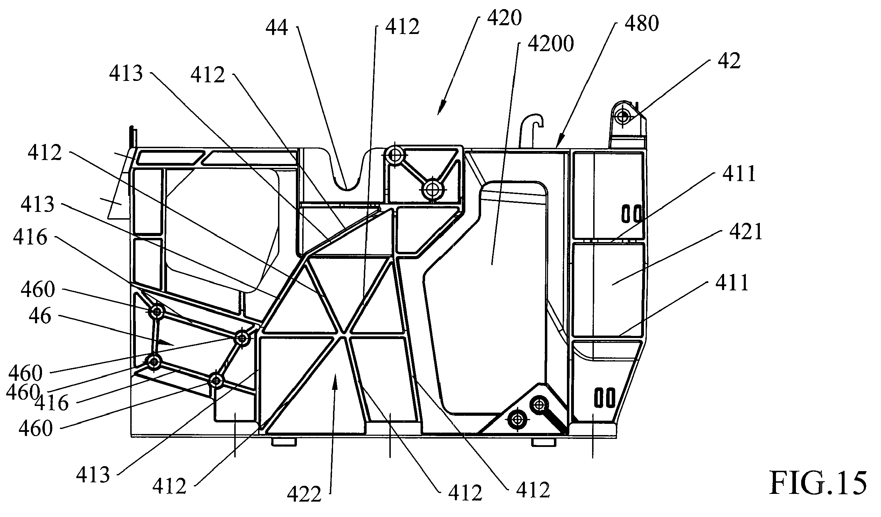

The second pillar 422 should support the pressure forces due to the weight of the driver positioned on seat 140. Seat 140 may have a reclinable portion, whereby the second pillar 422 is called to resist a greater weight force which tends to push in the rear direction of frame 4. To deal with this increased force, there is provided a multiplicity of ribs 413 belonging to the multiplicity of curvatures 412. Said multiplicity of second ribs 413 is arranged to form a counterfort to prevent the second pillar 422 from becoming deformed by bending toward the back of frame 4, as shown in particular in Figure 15.

A rear portion of the rear support frame 4 comprises the support housing 46 of support 16 of the collecting bag 160. Said support housing 46 is a portion carved in the side wall 420 which allows an engagement with an end of support 16 of the collecting bag 160. Said support housing 46 is a portion of the side wall 420 which is carved to allow the introduction of an end of support 16 of the collecting bag 160. The support housing 46 comprises through holes 460 for engagement means for securing the end of support 16 with the rear support frame 4. The support housing 46 is reinforced by further ribs 416.

Studying the forces and tensions of use of the rear support frame 4, the ribs 411, 412, 413, 416 were distributed to reinforce the structure of the rear support frame 4.

By applying pressure and tension forces axially and radially to the rear support frame 4 like those occurring when using the lawnmower, a maximum movement detected is comprised between 0.1 mm and 1 mm if the rear support frame 4 is made of 40% glass reinforced polypropylene and the walls of frame 3 are of a thickness between 2.5 and 3.5 mm. The maximum movement measures the maximum deformation of the wall of the rear support frame 4 most subjected to deformation once it is subjected to an axial or radial load. The maximum movement detected for the rear support frame 4 is by far better with respect to frames - even steel frames - of the prior art.

Both the front support frame 3 and the rear support frame 4 comprise two side walls 320, 420 on which an upper wall 380, 480 is mounted to form a door or an arch, which have a through opening 300, 400 arranged according to the longitudinal axis L. The two side walls 320, 420 are mounted on two longitudinal rods 220 of the base platform frame 2. The side walls 320, 420 raise upward relative to the base platform frame 2.

Both the front support frame 3 and the rear support frame 4 have walls 320, 420, 380, 480 of thickness is comprised between 2 mm and 5 mm. Preferably, the thickness is comprised between 2.5 and 3.5 mm.

As for the construction of the front support frame 3 and the rear support frame 4, they are molded or extruded according to methods of the prior art.

The geometrical simplicity of the frames 3, 4 advantageously allows to facilitate the construction thereof both with molding methods and with extrusion methods.

As for mounting the frames 3, 4 on the base platform frame 2, each of the two frames 3, 4 may be mounted with the two longitudinal rods 220 of the base platform frame 2 independently of each other, and secured in a simple, safe and integral manner through the respective engagement means 301, 302, 401, 402, 403.

Advantageously, the front support frame 3 is independent from the rear support frame 4 to facilitate mounting the lawnmower. In the event of maintenance, the front support frame 3 may be disassembled alone, and also the rear support frame 4 may be disassembled alone, in a completely independent manner from each other 3, 4 or 4, 3.

Alternatively, the base platform frame 2 is a bent sheet.

Again alternatively, the front support frame 3 may be mounted alone or the rear support frame 4 may be mounted alone, i.e. at least one support frame 3, 4. In said again alternative, frame 1 of a lawnmower vehicle which can be ridden by an operator comprises at least the support frame 3, 4 mounted on the base platform frame 2 of the lawnmower vehicle. Said at least one support frame 3, 4 is mounted on said two longitudinal rods 220. Said at least one support frame 3, 4 comprises two side walls 320, 420 which raise upward along a vertical axis V with respect to the base platform frame 2 and the upper wall 380, 480 mounted on the two side walls 320, 420. Said upper wall 380, 480 is arranged according to a transversal axis T, which is geometrically perpendicular to the longitudinal axis L. The two side walls 320, 420 of said at least one support frame 3, 4 are mounted integrally straddling the base platform frame 2.

Each side wall 320, 420 of said at least one support frame 3, 4 is mounted integrally with one of the two longitudinal rods 220 of the base platform frame 2.

Said base platform frame 2, said two side walls 320, 420 and said upper wall 380, 480 of said at least one support frame 3, 4 identify a through opening 300, 400 along the longitudinal axis L.

Alternatively, at least one wall 320, 420, 380, 480 of said at least one support frame 3, 4 is included in a list consisting of said two side walls 320, 420 and said upper wall 380, 480. Said at least one wall 320, 420, 380, 480 may mount various elements. Said at least one wall 320, 420, 380, 480 comprises at least one element included in a list comprising a steering housing 308, a support housing 311 for an axle 11 of pedals 110, a support for a hood 103, a support for a tank 12, a support for a radiator 13, a support housing 45 for a battery 15, a support housing 44 for a support 14 of a seat 140, two hinges 42 which hinge respective hinges of seat 140, a support housing 46 for a support 16 of a collecting bag 160.

Alternatively, at least one support frame 3, 4 is a monocoque body.

Again alternatively, said at least one support frame 3, 4 is made of a material included in a list comprising 40% glass reinforced polypropylene, from 10% to 60% glass reinforced polypropylene, fiberglass reinforced plastic, where the glass is comprised between 10% and 60%.

Alternatively, said front support frame 3 comprises at least one element of a list comprising the support housing 311 for the axle 11 of the pedals 110, the support for hood 103, the support for tank 12, the support for radiator 13.

Alternatively, the front wall 390 of the upper wall 380 mounts at least one element included in a list comprising the support for hood 103, the support for tank 12, the support for radiator 13.

Alternatively, said rear support frame 4 is provided to comprise at least one element included in a list comprising a support housing 45 for a battery 15, a support housing 44 for a support 14 of a seat 140, two hinges 42 which hinge respective hinges of seat 140, a support housing 46 for a support 16 of a collecting bag 160.

Alternatively, each side wall 420 of said two side walls 420 of said rear support frame 4 comprises the lower prolongation 423 comprising at least two through holes 4230 at other through holes 2240 of an L-shaped portion 224 of the longitudinal rod 220 of the base platform frame 2, where engagement means 401-403 are adapted to engage said through holes 4230, 2240 to integrally mount the side wall 420 with the respective longitudinal rod 220. There is a need to have at least two through holes 4230 at the ends of the rear support frame 4 to prevent twisting problems which would cause a lack of solidity in the connection between rear frame 4 and base platform frame 2.

Alternatively, the upper wall 480 of the rear support frame 4 comprises at least one element of a list comprising the support housing 45 for battery 15, where said support housing 45 is carved in the upper wall 480, the support housing 44 for the support 14 of seat 140, where said support housing 44 is carved in the upper wall 480, two hinges 42 arranged on the upper wall 480, said two hinges 42 are adapted to hinge respective hinges of seat 140.

Alternatively, the side wall 420 of the rear support frame 4 comprises a support housing 46 for a support 16 of a collecting bag 160, said support housing 46 is an opening of the side wall 420 which allows an engagement with an end of support 16 of the collecting bag 160.

Advantageously, the front support frame 3 is easy to be mounted, is less complex from a constructional viewpoint, reduces the number of components to be assembled, reduces assembly times, increases reliability and performance, is much more lightweight and is resistant, very resistant to external stresses, does not become deformed and is simple to be molded or extruded.

Advantageously, the rear support frame 4 is easy to be mounted, is less complex from a constructional viewpoint, reduces the number of components to be mounted, reduces assembly times, increases reliability and performance, is much more lightweight and is resistant, very resistant to external stresses, does not become deformed and is simple to be molded or extruded.

Advantageously, the front support frame 3 and the rear support frame 4 are easy to be mounted, are less complex from a constructional viewpoint, reduce the number of components to be assembled, reduce assembly times, increase reliability and performance, are much more lightweight and are resistant, very resistant to external stresses, do not become deformed and are simple to be molded or extruded.

## Claims

1. Frame (1) of a lawnmower vehicle riding by an operator, said frame (1) of the lawnmower comprises at least one support frame (3,4) for mounting an external frame, said at least one support frame (3, 4) is mounted on a base platform frame (2) of the lawnmower vehicle, said base platform frame (2) comprises two longitudinal rods (220) disposed parallel to each other along a longitudinal axis (L), said two longitudinal rods (220) identify respectively a left side and a right side of the base platform frame (2), said at least one support frame (3, 4) is mounted on said two longitudinal rods (220), said at least one support frame (3, 4) comprises two side walls (320, 420) which raise upward along a vertical axis (V) with respect to the base platform frame (2) and an upper wall (380, 480) mounted on the two side walls (320, 420), said upper wall (380, 480) is disposed along a transversal axis (T), which is geometrically perpendicular to the longitudinal axis (L), said longitudinal axis (L) and said transversal axis (T) identify a geometrical plane which is parallel to the ground, the two side walls (320, 420) of said at least one support frame (3, 4) are integrally mounted straddling the base platform frame (2) and each side wall (320, 420) of said at least one support frame (3, 4) is integrally mounted with one of the two longitudinal rods (220) of the base platform frame (2), said base platform frame (2), said two side walls (320, 420) and said upper wall (380, 480) of said at least one support frame (3, 4) identify a through opening (300, 400) along the longitudinal axis (L), wherein at least one wall (320, 420, 380, 480) of said at least one support frame (3, 4) is comprised in a list consisting of said two side walls (320, 420) and of said upper wall (380, 480), said at least one wall (320, 420, 380, 480) comprises at least one element comprised in a list comprising a steering housing (308), a support housing (311) for an axle (11) of pedals (110), a support for a hood (103), a support for a tank (12), a support for a radiator (13), a support housing (45) for a battery (15), a support housing (44) for a support (14) of a seat (140), two hinges (42) which hinge respective hinges of the seat (140), a support housing (46) for a support (16) of a collecting bag (160), **characterized in that** said at least one support frame (3, 4) is made of a material comprised in a list comprising 40% glass reinforced polypropylene, from 10% to 60% glass reinforced polypropylene, fiberglass reinforced plastic, wherein the glass is comprised between 10% and 60%, said at least one support frame (3, 4) is a monocoque body.

2. Frame (1) according to claim 1, **characterized in that** said at least one support frame (3, 4) comprises walls (320, 420, 380, 480) of thickness comprised between 2 mm and 5 mm.

3. Frame (1) according to any one of the claims 1 or 2, **characterized in that** said at least one support frame (3, 4) is a front support frame (3) consisting of said two side walls (320), of said upper wall (380) and of two reinforced arms (38), each reinforced arm (38) comprises an upper end (388) linked to said upper wall (380) and a lower end (382) linked to one only of said two side walls (320), the upper wall (380) of the front support frame (3) comprises the steering housing (308) which is a through hole (308) of said upper wall (380).

4. Frame (1) according to claim 3, **characterized in that** the upper wall (380) of the front support frame (3) comprises a multiplicity of reinforcing ribs (381) disposed at the steering housing (308).

5. Frame (1) according to any one of the claims 3-4, **characterized in that** both the upper end (388) of the left reinforced arm (38) and the upper end (388) of the right reinforced arm (38) are linked with a central portion of the upper wall (380) wherein the steering housing (308) is provided, and the lower end (382) of the left reinforced arm (38) is linked with a lower portion of the left side wall (320), the lower end (382) of the right reinforced arm (38) is linked with a lower portion of the right side wall (320).

6. Frame (1) according to claim 5, **characterized in that** said reinforced arms (38) identify two reinforcing axes (R) which are intersecting at the steering housing (308), each reinforcing axis (R) forming an angle (ρ) with the vertical axis (V), said angle (ρ) is comprised between 10 and 80 sexagesimal degrees.

7. Frame (1) according to any one of the claims 3-6, **characterized in that** said front support frame (3) comprises at least one element of a list comprising the support housing (311) for the axle (11) of the pedals (110), the support for the hood (103), the support for the tank (12), the support for the radiator (13).

8. Frame (1) according to any one of the claims 3-7, **characterized in that** each side wall (320) comprises two lower prolongations (321, 322), that said longitudinal rods (220) comprise L-shaped portions (221), that said two lower prolongations (321, 322) comprise through holes (3010, 3020) which overlap with through holes (2210) of the L-shaped portions (221) of the longitudinal rods (220), engagement means (301, 302) adapted for engaging said through holes (3010, 3020, 2210) for integrally mounting the side wall (320) with the respective longitudinal rod (220).

9. Frame (1) according to claim 8, **characterized in that** each lower prolongation (321, 322) of said two lower prolongations (321, 322) comprises at least two reinforcing ribs (3211) disposed along diagonals of said lower prolongation (321, 322).

10. Frame (1) according to any one of the claims 3-9, **characterized in that** each side wall (320) of the front support frame (3) comprises a lower prolongation (323) which extends towards the rear of the frame (1) along the longitudinal axis (L), staying on the respective longitudinal rod (220), each prolongation (323) comprises an upper surface which is carved to form the support housing (311) for the axle (11) of the pedals (110), said prolongation (323) comprises an upper portion (324) comprising a lower surface which is carved into a lower housing (314) which is of complementary shape with respect to the support housing (311), said prolongation (323) rotatably mounts said axle (11) of the pedals (110).

11. Frame (1) according to any one of the claims 3-10, **characterized in that** said side wall (320) of the front support frame (3) ends upwards in an oblique surface (328) which mounts said upper wall (380), said oblique surface (328) identifies an oblique axis (W) which forms with the longitudinal axis (L) a dashboard angle (α) comprised between 0 and 90 sexagesimal degrees, said oblique surface (328) facing towards the rear of the frame (1).

12. Frame (1) according to any one of the claims 3-11, **characterized in that** the side wall (320) comprises a front surface (329) facing towards the front of the frame (1) along the longitudinal axis (L), said front surface (329) identifies a front axis (F) which is at a front angle (ϕ) with respect to the vertical axis (V), said front angle (ϕ) is comprised between 0 and 60 sexagesimal degrees, said front surface (329) mounts a front wall (390) of the upper wall (3 80).

13. Frame (1) according to claim 12, **characterized in that** the front wall (390) of the upper wall (380) mounts at least one element comprised in a list comprising the support for the hood (103), the support for the tank (12), the support for the radiator (13).

14. Frame (1) according to any one of the claims 3-13, **characterized in that** said side wall (320) of the front support frame (3) comprises a multiplicity of ribs (361-369, 371-379) arranged in triangular geometric modules.

15. Frame (1) according to any one of the claims 1 or 2, **characterized in that** said at least one support frame (3, 4) is a rear support frame (4) consisting of said two side walls (420) and of said upper wall (480), said at least one rear support frame (4) is adapted to mount a seat (140).

16. Frame (1) according to claim 15, **characterized in that** said rear support frame (4) comprises at least one element comprised in a list comprising a support housing (45) for the battery (15), a support housing (44) for a support (14) of a seat (140), two hinges (42) which hinge respective hinges of the seat (140), the support housing (46) for the support (16) of the collecting bag (160).

17. Frame (1) according to any one of the claims 15 or 16, **characterized in that** said two side walls (420) and said upper wall (480) of said rear support frame (4) form an arch.

18. Frame (1) according to any one of the claims 15-17, **characterized in that** each side wall (420) of said two side walls (420) of said rear support frame (4) comprises a lower prolongation (423) comprising at least two through holes (4230) in correspondence with other through holes (2240) of a L-shaped portion (224) of the longitudinal rod (220) of the base platform frame (2), engagement means (401-403) are adapted to engage said through holes (4230, 2240) for integrally mount the side wall (420) with the respective longitudinal rod (220).

19. Frame (1) according to any one of the claims 16-18, **characterized in that** the upper wall (480) of the rear support frame (4) comprises at least one element of a list comprising the support housing (45) for the battery (15), wherein said support housing (45) is carved into the upper wall (480), the support housing (44) for the support (14) of the seat (140), wherein said support housing (44) is carved into the upper wall (480), two hinges (42) are disposed on the upper wall (480), said two hinges (42) are adapted to hinge respective hinges of the seat (140).

20. Frame (1) according to any one of the claims 16-19, **characterized in that** the side wall (420) of the rear support frame (4) comprises a support housing (46) for the support (16) of a collecting bag (160), said support housing (46) is a portion which is carved into the side wall (420) which enables an engagement with an end of the support (16) of the collecting bag (160).

21. Frame (1) according to any one of the claims 19 or 20, **characterized in that** the side wall (420) of said rear support frame (4) comprises a first pillar (421) disposed under and in correspondence with said two hinges (42) and a second pillar (422) disposed under and in correspondence with the support housing (44) for the support (14) of the seat (140).

22. Frame (1) according to claim 21, **characterized in that** the first pillar (421) of the side wall (420) of the rear support frame (4) is reinforced with ribs (411) and that the second pillar (422) of the side wall (420) of the rear support frame (4) is reinforced with a multiplicity of other ribs (412) geometrically disposed to form a lattice of triangles.

23. Frame (1) according to claim 22, **characterized in that** said multiplicity of other ribs (412) comprises a multiplicity of second ribs (413) disposed to form a counterfort.
